# EUROPEAN PATENT APPLICATION

(11) **EP 1 925 865 A1**
(43) Date of publication of application: **28.05.2008**
(21) Application number: 07079510.9
(22) Date of filing: 06.11.2007
(51) Int. Cl.: F16K 41/08, F16J 15/32

(54) **Metal stem seal**

(30) Priority: 22.11.2006 GB 0623326
(71) Applicant: British Engines Limited, Newcastle-Upon-Tyne, Tyne & Wear NE6 1BS (GB)
(72) Inventor: Williamson, Christopher, Tyne & Wear NE6 1BS (GB)
(74) Representative: Gray, James

(57) **Abstract**

The present invention provides a stem seal (10) comprising an annular body (12) having a central aperture, inner and outer spaced sealing lips (16,14) surrounding the aperture, and an outwardly depending circumferential flange (38) The inner and outer lips (16,14) are preferably separated by a circumferential recess (20) of the annular body (12). The recess (20) may have a curved profile in cross-section.

## Description

The present invention relates to a stem seal and particularly, though not exclusively, to a stem seal for a valve arrangement.

Valve arrangements for use in controlling the flow of high pressure fluids typically include a movable stem. The fluids, which may be in the form of a liquid, vapour or gas, may be at a pressure of up to 20,000 psi. In use, the stem is movable so as to move a blocking member, such as a gate or ball element, to open and close a flow passage through the valve body. A stem seal is typically provided between the stem and the valve body to prevent the flow of fluid at the interface of the stem with the valve body. The stem seal must provide both static and dynamic sealing. The stem may be rotatable about its longitudinal centreline axis. Alternatively, the stem may be movable axially in a direction aligned with its longitudinal centreline axis.

According to the present invention there is provided a stem seal comprising an annular body having a central aperture, inner and outer spaced sealing lips surrounding the aperture, and an outwardly depending circumferential flange.

The central aperture is sized so as to be able to receive the cylindrical stem of a valve arrangement therethrough, and the inner lip is configured so as to provide a seal against the stem. The outer lip is sized so as to fit to and seal against a circular recess of a portion of the valve body such as the valve bonnet. The circumferential flange may be utilised to locate the seal at a desired location within the valve bonnet. For example, the flange may be sized so as to fit to complementarily shaped feature, such as a step or a ledge, of the valve bonnet.

The inner and outer lips are separated by a circumferential recess of the annular body. The recess has a curved profile in cross-section. The curve of the recess is preferably corresponds to that of a conic section. In a preferred embodiment the conic section is a hyperbola and more preferably an asymmetric hyperbola. In a preferred embodiment the lips are both of a substantially equal length from their respective roots to their respective tips. The lips preferably taper from their roots to their tips. In a preferred embodiment the inner lip is tapered to greater extent than the outer lip such that the tip of the inner lip is narrower than the tip of the outer lip.

The flange is preferably of a substantially uniform thickness from its root to its tip. The flange may be thicker than the lips. The flange extends in direction which is substantially perpendicular to the direction of the lips.

According to a further aspect of the present invention there is provided a valve assembly including a valve bonnet, a movable valve stem and a stem seal according to the first aspect.

An embodiment of the present invention is described with reference to the accompanying drawings in which:

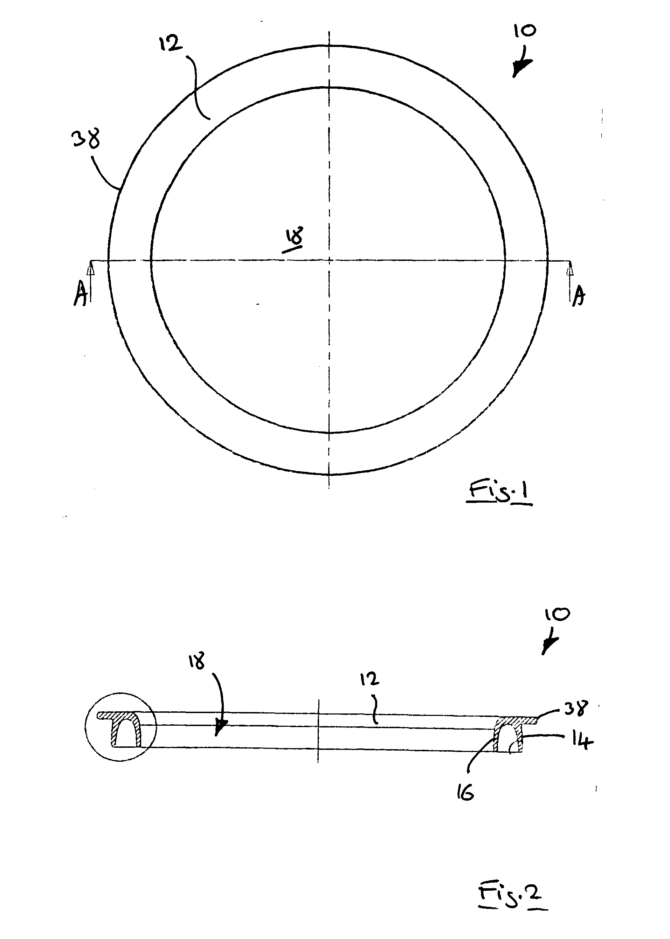

Figure 1 is a plan view of the seal;
Figure 2 is a cross-sectional view of the seal as indicted by arrows A-A of figure 1;

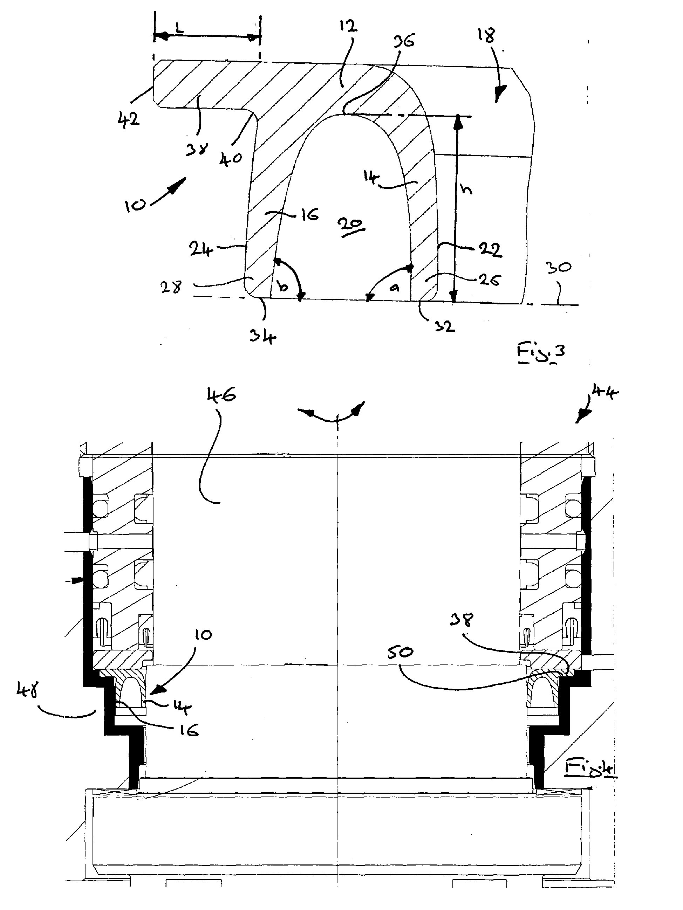

Figure 3 is an enlarged cross-sectional view of the portion of the seal ringed in figure 2; and
Figure 4 is a cross-sectional view of a seal according to the present invention fitted to a valve assembly.

Referring to the figures there is shown a seal generally designated 10. The seal 10 is of unitary construction and comprises an annular body 12. The seal 10 is provided with a continuous inner sealing lip 14 and a continuous outer sealing lip 16. The terms "inner" and "outer" are construed with reference to the centre 18 of the annular body 12. The sealing lips 14, 16 are separated by a circumferential recess 20 of the annular body 12. The inner sealing lip 14 is provided with an inner sealing surface 22 and the outer sealing lip 16 is provided with an outer sealing surface 24. The sealing surfaces 22,24 are provided at the distal ends 26, 28 of the respective lips 14,16.

In use, the inner sealing surface 22 contacts and provides a seal against a cylindrical member, such as the stem of a valve assembly, which extends through the centre of the annular body 12. In use, the outer sealing surface 24 contacts and provides a seal against a body to which the seal 10 is fitted, such as, for example, the bonnet of a valve assembly. Typically the seal 10 is fixed relative to the valve body whereas the stem is rotatable relative to the seal 10. It will thus be appreciated that outer sealing surface 24 must provide a static seal, whereas the inner sealing surface 22 must provide both a dynamic and a static seal depending upon whether or not the stem is rotating relative to the inner sealing surface 22.

The recess 20 provided between the lips 14,16 is curved in cross section and takes the form of an asymmetric hyperbola. In the embodiment shown, the angle a of the recess side of the inner lip 14 to a reference plane 30 which contacts the distal tips 32, 34 of the lips 14,16 is greater that the corresponding angle b of the recess side of the outer lip 16 to the reference plane 30. Each lip 14,16 has a substantially equal height h measured from the vertex 36 of the recess 20 to the respective tip 32,34 of each lip 14,16 and both lips 14,16 narrow in cross-section in the direction of their tips 32,34. it will be noted however that the outer lip 16 is generally thicker than the inner lip 14. Accordingly, the inner lip 14 exhibits greater flexibility than the outer lip 16. This greater flexibility of the inner lip 14 assists with the providing the dynamic and static seal requirements of the inner sealing surface 22.

The flexibility of the lips 14,16 ensures that the sealing performance of the seal 10 is not unduly affected by extremes of temperature. The flexible nature of the lips 14,16 is able to accommodate expansion and contraction of the stem and valve body. The extremes of temperature experienced by the seal 10 may range from minus 101 degrees centigrade to plus 200 degrees centigrade.

The body 12 is further provided with an outwardly directed circumferential flange generally designated 38. The flange 38 extends in a direction which is substantially perpendicular to that of the lips 14,16. In cross-section the flange 38 has a generally constant thickness from its root 40 to its tip 42. In the embodiment shown, the tip 42 of the flange 38 is chamfered and the flange 38 has a thickness that is greater than that of the lips 14,16. In the embodiment shown, the length 1 of the flange 38 is less than the height h of the lips 14,16. The flange 38 functions as a means to hold and locate the seal 10 during its manufacture, for example during machining operation, and to locate the seal at a desired location within a valve body, in use. The flange 38 may further resist pressure which is external to the valve body, for example when the valve is used in a sub sea environment.

Figure 4 shows a cross-sectional view of a portion of a valve assembly, generally designated 44, having a seal 10 according to the present invention. The valve assembly 44 includes a rotatable stem 46 which is provided within a pressure containing valve body 48. The inner lip 14 rests against the stem 46, while the outer lip 16 rests against the valve body 48. The flange 38 rests against a step 50 of the valve body 48 to locate the seal 10.

The body 12 of the seal 10 is manufactured from metal such as, for example, Nickel based alloy, duplex stainless steel, Titanium or other high strength ferrous or non-ferrous metal. Advantageously, the body 12 may be provided with a coating so as to provide desired surface properties for the seal 10. The body 12 may be provided with coating of silver having a thickness of approximately 0.1mm. In an alternative embodiment, the body 12 may be provided with a hardened coating, for example a coating of Titanium Nitride. In yet a further alternative embodiment the body 12 may be provided with a low friction coating such as, for example, a coating of Tungsten Disulphide. The use of a low friction coating is advantageous for instances where post installation maintenance if the valve is not possible. An example of such an instance is where the valve is situated in deep water. The body 12 may be provided with a combined hardened and low friction coating. The valve stem 46 may also be provided with a hard coating such s, for example, Tungsten Carbide.

The seal 10 has been described with reference to sealing a movable stem of a valve. Seals 10 according to the present invention may also be utilised for axial and/or rotary sealing in a pump or motor, for example.

## Claims

1. A stem seal comprising an annular body having a central aperture, inner and outer spaced sealing lips surrounding the aperture, and an outwardly depending circumferential flange.

2. A stem seal as claimed in claim 1 wherein the inner and outer lips are separated by a circumferential recess of the annular body.

3. A stem seal as claimed in claim 2 wherein the recess has a curved profile in cross-section.

4. A stem seal as claimed in claim 3 wherein the curve of the recess corresponds to that of a conic section.

5. A stem seal as claimed in claim 4 wherein the conic section is a hyperbola.

6. A stem seal as claimed in claim 4 or claim 5 wherein the conic section is an asymmetric hyperbola.

7. A stem seal as claimed in any preceding claim wherein the lips are both of a substantially equal length from their respective roots to their respective tips.

8. A stem seal as claimed in claim 7 wherein the lips taper from their roots to their tips.

9. A stem seal as claimed in claim 8 wherein the inner lip is tapered to greater extent than the outer lip such that the tip of the inner lip is narrower than the tip of the outer lip.

10. A stem seal as claimed in any preceding claim wherein the flange is of a substantially uniform thickness from its root to its tip.

11. A stem seal as claimed in claim 10 wherein the flange is thicker than the lips.

12. A stem seal as claimed in any preceding claim wherein the flange extends in direction which is substantially perpendicular to the direction of the lips.
